# FASCICULE DE BREVET EUROPEEN

(11) **EP 2 265 445 B1**
(45) Date de publication et mention de la délivrance du brevet: **29.08.2012**
(21) Numéro de dépôt: 09738337.6
(22) Date de dépôt: 15.04.2009
(51) Int. Cl.: B60B 1/04, B60B 1/00, B60B 5/02, B60B 21/06

(54) **RAYON POUR UNE ROUE A RAYONS, ROUE ET PROCEDE CORRESPONDANTS**
SPEICHENRADSPEICHE SOWIE ENTSPRECHENDES RAD UND VERFAHREN DAFÜR
SPOKED WHEEL SPOKE AND CORRESPONDING WHEEL AND METHOD

(30) Priorité: 15.04.2008 FR 0802075
(43) Date de publication de la demande: 29.12.2010
(73) Titulaire: MAVIC S.A.S., 74370 Metz-Tessy (FR)
(72) Inventeur: MERCAT, Jean-Pierre, F-74650 Chavanod (FR); MOUZIN, Olivier, F-74210 Montmin (FR)
(86) Numéro de dépôt international: PCT/FR2009/000435
(87) Numéro de publication internationale: WO 2009/133303

(56) Documents cités:
- WO-A1-96/41083
- FR-A- 2 586 378
- FR-A- 2 900 869
- FR-A1- 2 816 245
- JP-A- 60 174 302
- US-A- 5 350 221
- US-A- 5 779 323
- US-A1- 2004 155 518
- US-A1- 2007 257 548

## Description

La présente invention concerne un rayon pour une roue à rayons, une roue comprenant au moins un tel rayon ainsi qu'un procédé de fabrication d'un tel rayon et un outil de frappe destiné à la mise en oeuvre de ce procédé.

Dans le domaine des cycles, une roue pour vélo comprend une jante périphérique et un moyeu central, ces deux éléments étant reliés par des rayons. L'ensemble des rayons représente de 15 à 30 % du poids d'une roue, mais ils contribuent énormément à la rigidité de celle-ci. Notamment, la raideur latérale d'une roue est en très grande partie déterminée par la rigidité du rayon.

Il est connu d'équiper une roue de cycle par des rayons métalliques, la fabrication en est simple et le coût peu élevé. Cependant, ces rayons sont relativement lourds et ont un module spécifique relativement faible.

On appelle module spécifique le nombre correspondant au module de Young pour un matériau donné divisé par la densité du matériau. Par exemple pour l'acier inox dont le module de Young est de 190 000 MPa pour une densité de 7,8 kg/dm³ le module spécifique est égal à 24 359 MPa

Pour pallier cet inconvénient, des rayons en matériau composite sont utilisés. Ces rayons sont généralement composés de fibres noyées dans une matrice de résine thermodurcissable de type époxy ou polyester ou encore de résine thermoplastique. Les fibres utilisées peuvent être toutes les fibres à haute performance, comme par exemple, des fibres de carbone, d'aramide (p. ex KEVLAR), de polyéthylène, PBO (polyphenylenebenzobisoxasole). Ces matériaux ont des modules spécifiques bien plus élevés que les métaux. D'autre part, ces matériaux sont plus résistants à la fatigue induite par la mise en tension sur de très longue périodes, notamment car la propagation des fissures s'y fait moins facilement que dans les métaux.

L'utilisation des matériaux composites est bien adaptée à la partie centrale d'un rayon. Il est cependant très délicat de réaliser les extrémités d'accrochage, en partie parce qu'il est très difficile d'y réaliser des filetages, mais également car ces matériaux sont peu résistants au cisaillement.

Le document EP 165 590 divulgue un rayon comportant deux embouts rapportés à chacune des extrémités d'un corps du rayon réalisé en matériau composite. Le corps du rayon est cylindrique d'un diamètre environ égal à 1,5 mm. L'embout destiné à être connecté avec le moyeu est réalisé dans une tige d'acier inoxydable de 2,5 mm de diamètre et il comprend un coude à son extrémité. L'embout destiné à être connecté avec la jante comprend un filetage extérieur apte à coopérer avec un écrou. Chacun des embouts est percé d'un trou de 30 mm de profondeur prévu pour recevoir le corps de rayon. La liaison entre le corps de rayon et les embouts est réalisé par collage. Le périmètre de collage est inférieur à 5 mm, et sa longueur est de 30 mm. Il s'avère qu'un tel périmètre de collage n'est pas suffisant pour garantir une résistance à l'arrachement de la liaison de l'embout avec le corps de rayon lorsque le rayon est soumis à une tension de 3000 N. De plus, la longueur du collage choisie est telle que l'embout doit avoir une longueur supérieure ou égale à cette valeur de 30 mm. Or l'embout étant réalisé en acier, plus celui-ci sera long, plus le rayon final sera lourd. On comprend donc que le rayon décrit dans le document EP 165 590 ne résoud que partiellement le problème de fournir un rayon à la fois résistant et léger.

De manière générale, un rayon de roue est toujours tendu et il doit supporter une contrainte de traction durant toute la période et les milieux d'utilisation. A l'assemblage, lorsqu'on met un rayon d'une longueur de 300 mm sous tension, son allongement est faible; de l'ordre de 0,6 mm. Aussi, un fluage de 0,1 mm provoque une perte de tension de l'ordre de 15 à 20%. On comprend donc, qu'un rayon doit être très stable dans le temps et ne pas se relaxer sous les contraintes permanentes auxquelles il est soumis.

Un des grands problèmes posés par l'assemblage par collage des embouts sur un corps de rayon composite réside dans le fluage de la colle dans le temps. De plus des variations de températures importantes peuvent également intervenir au cours de la vie d'une roue (conditions climatiques, entreposage dans une voiture derrière une vitre). Ces variations de températures ont des effets sur les caractéristiques des colles utilisées. Par exemple, l'élévation de la température peut augmenter la propension de la colle à fluer. Ainsi, les variations de température peuvent occasionner des variations de la tension du rayon du fait des différences de coefficients de dilatation thermiques des multiples matériaux qui composent la roue complète. C'est notamment le cas lorsque la jante est en aluminium; lorsque la roue monte en température, elle se dilate et la tension sur les rayons augmente. Ce problème de fluage n'est pas correctement résolu par l'art antérieur.

Un autre inconvénient du rayon décrit dans le document EP 165 590 réside dans la difficulté de montage de celui-ci sur la roue. Notamment, lorsque la personne qui assemble le rayon à la jante, serre l'écrou, il doit s'assurer que le couple généré par le frottement de l'écrou sur la partie filetée de l'embout est bien repris par un outil auxiliaire. En effet, sachant qu'un rayon fait de matériau composite n'a qu'une très faible résistance à la torsion, si on ne reprend pas ce couple, il y a de très forte chance que le corps du rayon se casse ou délamine lors de la mise sous tension du rayon. Dans le cas du rayon décrit dans le document EP 165 590, du fait de la forme circulaire, cette reprise doit être faite par une pince, laquelle risque de laisser des marques sur l'embout.

Le document US 5,350,221, comportant les caractéristiques du préambule de la revendication 1, décrit également des rayons comportant deux embouts rapportés à chacune des extrémités d'un corps de rayon réalisé en matériau composite. Dans une des réalisations le corps de rayon et les embouts sont métalliques et de section circulaire. Dans une autre réalisation le corps de rayon et une partie des embouts ont une section non-circulaire et dans ce cas les embouts sont réalisés en matière plastique. Aucune des réalisations proposées dans ce document ne constitue un rayon suffisamment léger et suffisamment rigide.

Le but de la présente invention est de prévoir un rayon permettant à une roue équipée de tels rayons d'être légère et rigide.

Un autre but de l'invention est de prévoir un rayon permettant à une roue équipée de tels rayons d'être aérodynamique.

Un autre but de l'invention est de prévoir un rayon permettant à une roue équipée de tels rayons d'être plus facile à assembler.

Un autre but de l'invention est de prévoir un rayon permettant à une roue équipée de tels rayons de garder ses caractéristiques de rigidité sur une très longue période.

Un autre but de l'invention est de prévoir un rayon qui soit peu couteux à fabriquer en grande série.

A cet effet, l'invention a pour objet un rayon pour une roue à rayons, le rayon étant destiné à relier une jante de la roue et un moyeu de la roue, ce rayon comportant :
- un corps de rayons en matériau composite,
- au moins un embout en matériau métallique apte à être fixé sur la jante ou sur le moyeu et apte à coopérer avec une extrémité du corps de rayon, caractérisé en ce que le corps du rayon présente une section transversale allongée et en ce que le ou au moins un des embouts définit un logement dont la section transversale interne est sensiblement complémentaire de celle du corps de rayon, de manière à coiffer l'extrémité en regard du corps.

De préférence, en section transversale, le corps de rayon présente une épaisseur (e) et une longueur (I) telles que le rapport entre l'épaisseur et la longueur est inférieur ou égal à 0.5, et de préférence inférieur ou égal à 0.33.

En section transversale, le corps de rayon a un périmètre (p) supérieur ou égal à 10 mm.

De préférence, la longueur L de l'extrémité du corps pénétrant dans le logement de l'embout est supérieure ou égale à 10 mm, et de préférence comprise entre 12 mm et 15 mm.

De préférence, la longueur (L) de l'extrémité est inférieure ou égale au périmètre (p) multiplié par 3, et de préférence au périmètre (p) multiplié par 1.5.

De préférence, la surface de collage entre l'extrémité du corps de rayon et l'embout est supérieure ou égale à 100 mm².

Dans un mode de réalisation, la paroi intérieure de l'embout ou au moins un des embouts est creusée de stries d'accrochage de la colle, formant notamment un taraudage.

Ledit ou au moins un desdits embouts est composé d'un métal d'une densité inférieure à 3kg/dm³ ce métal pouvant être un alliage d'aluminium ou un alliage de magnésium.

L'objectif de l'invention est également atteint par la fourniture d'une roue à rayons comprenant : - un moyeu central, - une jante périphérique, - des rayons reliant la jante au moyeu, dans laquelle un ou (les) rayons est (sont) conforme(s) à ce qui vient d'être décrit ci-dessus.

L'objectif de l'invention est également atteint par la fabrication d'un rayon suivant le procédé comportant les étapes suivantes : - former une ébauche avec une extrémité cylindrique, et - frapper l'extrémité cylindrique de l'ébauche de façon à définir le logement de section transversale complémentaire de celle du corps de rayon.

De préférence, le procédé comporte une première étape de traitement thermique de l'ébauche avant l'étape de frappe de l'ébauche et il peut éventuellement comporter une deuxième étape de traitement thermique de l'ébauche après l'étape de frappe de l'ébauche.

L'outil de frappe pour la mise en oeuvre du procédé précédent comprend : une base destinée à recevoir l'ébauche, munie de deux surfaces de butée, disposées de part et d'autre d'une première surface creusée de profil arrondi semi-elliptique, la base étant en outre munie d'une échancrure de guidage destiné à guider l'ébauche dans une position de frappe, et un poinçon destiné à frapper l'extrémité cylindrique de l'ébauche, le poinçon étant muni de surfaces de butée complémentaires disposées de part et d'autre d'une seconde surface creusée de profil arrondi semi-elliptique, les surfaces creusées définissant, lors de la coopération des surfaces de butée, un profil correspondant à celui d'au moins une partie de l'embout final.

Grâce au rayon selon l'invention, le corps de rayon présente une structure aérodynamique dont la fixation à la jante et au moyeu est suffisamment robuste pour résister à une tension élevée ainsi qu'au cycle de fatigue due à une utilisation dans des conditions sévères par un cycliste.

Suivant d'autres caractéristiques avantageuses du rayon pour une roue à rayons conforme à l'invention ainsi que du procédé de fabrication d'un tel rayon, prises isolément ou selon toutes les combinaisons techniquement possibles:

L'invention sera mieux comprise à la lecture de la description qui va suivre, donnée uniquement à titre d'exemple et fait en se référant aux dessins sur lesquels :
- la figure 1 est une vue en perspective d'une roue munie d'un rayon selon la présente invention ;
- la figure 2a est une vue e d'un rayon selon l'invention ;
- la figure 2b est une vue en coupe montrant l'assemblage du rayon de la figure 2 dans la jante ;
- la figure 3 est une coupe d'un corps du rayon selon le plan III de la figure 2 ;
- la figure 4 est une coupe d'un corps de rayon selon un autre mode réalisation de l'invention selon le plan III de la figure 2 ;
- la figure 5 est une vue en perspective, avec arrachements, illustrant le corps du rayon fixé dans un embout ;
- la figure 6 est une vue en perspective d'une ébauche avant une étape de frappe, l'ébauche étant destinée à former l'embout de la figure précédente;
- la figure 7 est une coupe longitudinale de l'ébauche de la figure 6 ;
- la figure 8 est une vue en perspective de l'embout après l'étape de frappe ;
- la figure 9 est une coupe de l'embout selon le plan IX de la figure 8 ;
- la figure 10 est une coupe de l'embout selon le plan X de la figure 8 ;
- les figures 11, 12 et 13 sont des vues respectivement en perspective, de côté et de face, d'un outil de frappe de l'ébauche des figures 6 et 7, en position ouverte ;
- les figures 14, 15 et 16 sont des vues respectivement en perspective, de côté et de face, de cet outil de frappe en position fermée.

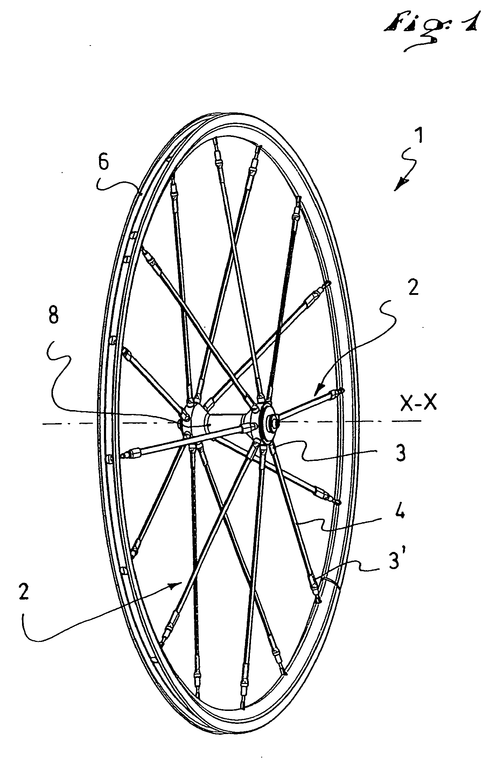

La figure 1 représente une roue 1 munie de plusieurs rayons 2. Chaque rayon 2 comporte deux embouts 3, 3' fixés sur un corps de rayon 4, lui permettant d'être fixé respectivement sur une jante 6 et sur un moyeu 8. Le moyeu 8 est muni d'un arbre central définissant un axe central de rotation X-X de la roue 1.

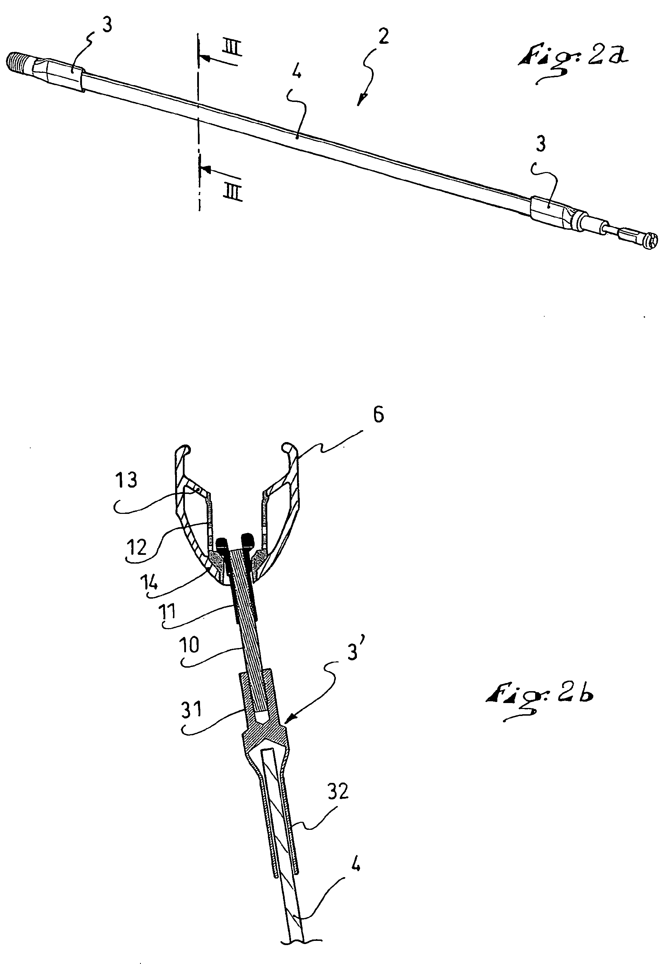

La figure 2 représente le rayon 2 comprenant le corps de rayon 4 et les deux embouts 3, 3' fixés aux deux extrémités respectives du corps de rayon 4. Le corps de rayon 4 est en matériau composite, réalisé par exemple de fibres de carbone ou de matériau équivalent, tel que du KEVLAR, noyées dans une matrice de résine thermodurcissable de type époxy ou polyester. Bien entendu, d'autres fibres à haute performance, comme par exemple, des fibres d'aramide, de polyéthylène ou de PBO pourront être utilisées ainsi qu'une matrice en résine thermoplastique.

Chacun des embouts 3, 3' comprend un tronçon de fixation 31, destiné à assurer la fixation de l'embout dans la jante 6 ou le moyeu 8 et un tronçon de solidarisation 32 destiné à assurer la solidarisation de l'embout et du corps de rayon 4. Les tronçons de solidarisation 32 de chacun des embouts 3, 3' sont identiques tandis que les tronçons de fixation sont différents.

L'embout 3, qui se situe à la gauche de la figure 2a est destiné à être vissé dans le moyeu 8. Son tronçon de fixation 31 consiste en un filetage extérieur.

L'embout 3', qui se situe à la droite de la figure 2a est destiné à être fixé à la jante.

La figure 2b montre en coupe comment on procède à la fixation de l'embout 3' dans la jante. Le tronçon de fixation 31 de l'embout 3' consiste en un perçage taraudé dans lequel est inséré un goujon 10. Le goujon 10 est vissé en force où encore vissé collé de telle manière qu'il soit solidaire de l'embout 3'. Un écrou 11, vissé sur le goujon 10, prend appui sur la partie basse d'un élément de guidage 12, lequel est inséré entre le pont supérieur 13 et le pont inférieur 14 de la jante.

L'assemblage d'un rayon selon l'invention et la mise en tension de celui-ci est réalisé comme suit. Tout d'abord on vient présenter le rayon au regard d'un des alésages du moyeu 8, de telle façon que le goujon 10 pénètre dans l'élément de guidage 12. Ensuite on visse l'embout 3 de telle façon que le profil le plus large du rayon se trouve sensiblement dans le plan de la roue. Cette disposition garantit un meilleur aérodynamisme à la roue.

Enfin, l'écrou est vissé sur le goujon.

La mise sous la tension désirée du rayon peut être effectuée de plusieurs façons suivantes. Comme on peut le voir à la figure 2, l'écrou 11 est à la fois muni d'une empreinte de tournevis plat et d'un corps à pans carrés. On pourra donc utiliser un tournevis ou une clé.

Avantageusement selon l'invention, le tronçon de solidarisation des embouts 3 n'a pas une section circulaire. On pourra donc facilement l'immobiliser en rotation à l'aide d'une clé sans qu'une pression ne soit exercée à sa surface comme c'est le cas lorsqu'une pince immobilise une surface cylindrique.

Les deux réalisations du tronçon de fixation décrites ici ne le sont qu'à titre d'exemple. En effet on pourra prévoir tout autre moyen de fixation équivalent.

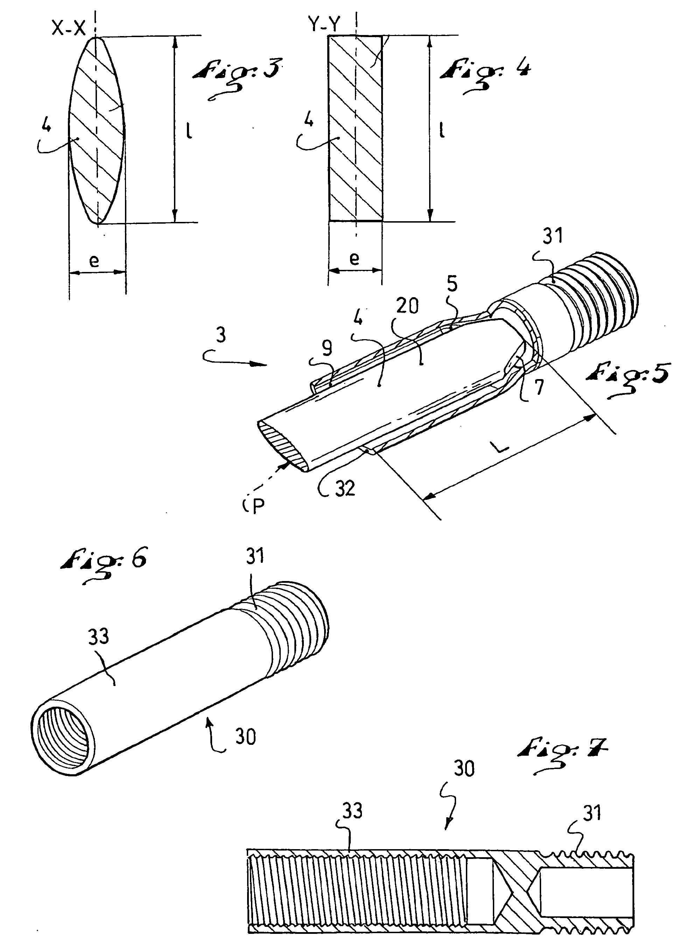

Comme représenté sur les figures 3 et 4, le corps de rayon 4 est à section transversale allongée. Une telle section est définie par une dimension principale, ou longueur l, et par une dimension secondaire, ou épaisseur e, de telle manière que l'épaisseur e est, de façon avantageuse, nettement inférieure à la longueur l. Dans une volonté d'améliorer l'aérodynamisme du rayon 2, en particulier, et de la roue 1 en général, il est avantageusement prévu que le rapport entre e et l soit inférieur ou égal à 0.5, et de préférence inférieur ou égal à 0.33. A titre d'exemple, e peut être égale à 1.8 mm et l égale à 6.4 mm.

En conséquence, comme le montre les figures 3 et 4, en positionnant le rayon 2 de tel sorte que son axe principal Y-Y soit sensiblement perpendiculaire à l'axe X-X, la pénétration dans l'air du rayon et de l'ensemble de la roue 1 peut se faire de manière satisfaisante. Sur la figure 3, on prévoit un profil symétrique de la section du corps de rayon 4 avec des extrémités arrondies du côté droit et du côté gauche de la section. Il peut également être prévu une section de corps de rayon rectangulaire comme illustrée sur la figure 4. Ces deux exemples de sections peuvent également être asymétriques. De manière générale, le rayon conforme à l'invention est de type rayon « plat ».

L'embout 3 est en matériau métallique. Il est privilégié l'utilisation d'embouts composés de métal ayant une densité inférieure à 3 kg/dm³. A titre d'exemple, on peut citer les alliages d'aluminium ou de magnésium. On obtient ainsi un rayon 2 à faible masse.

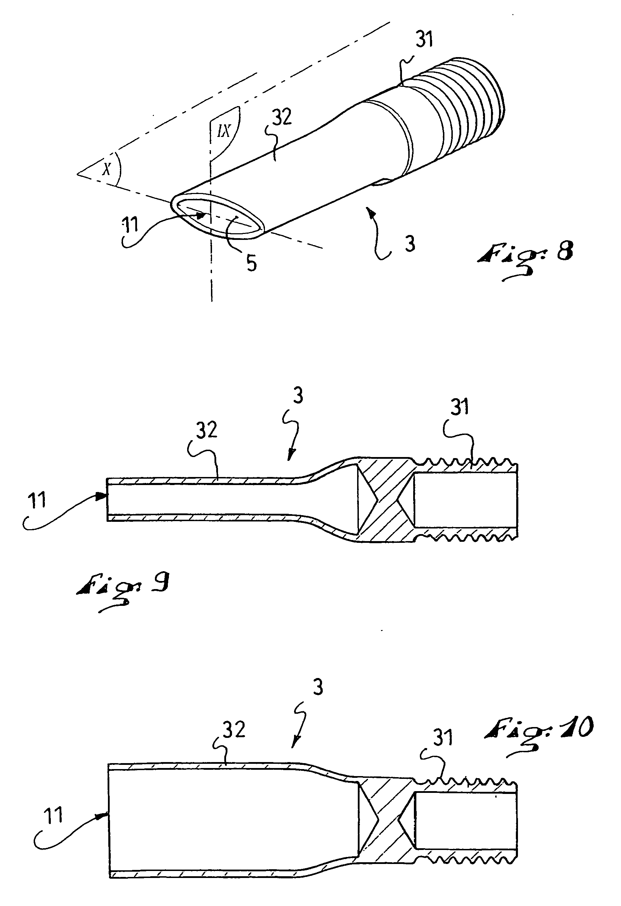

La figure 5 illustre l'embout 3 dont une partie a été arrachée alors que la figure 8 représente l'embout dans son intégralité. L'embout 3 est composé d'un tronçon de fixation 31, destiné à assurer la fixation de l'embout 3 sur la jante 6 ou le moyeu 8, et d'un tronçon 32 de solidarisation du corps de rayon 4 définissant un logement 5 de réception de ce corps de rayon. Le tronçon de solidarisation 32 a une section transversale allongée permettant au corps de rayon 4 de se loger à l'intérieur même de l'embout 3. Une extrémité 20 de longueur L du corps de rayon 4, représentée sur la figure 5, peut ainsi être introduite puis fixée dans l'embout 3. Afin de s'assurer que l'extrémité du corps de rayon pénètre jusqu'au fond du logement 5, il est réalisé aux extrémités du corps de rayon 4 des chanfreins 7 facilitant ainsi le coiffage du corps de rayon 4 dans le tronçon de solidarisation 32 de l'embout 3.

Le profil intérieur du tronçon de solidarisation 32 est analogue à celui du corps de rayon 4, représenté sur la figure 3, avec la présence d'un léger jeu dimensionnel périphérique. Le jeu en question a une valeur comprise entre 0,05 mm et 0,5 mm. Il est donc défini un espace intercalaire 9, représenté sur la figure 5, qui peut être rempli de colle. La fixation de l'extrémité 20 du corps de rayon 4 peut donc être assurée par collage. A titre d'exemple, il peut être utilisé une colle époxy ou encore une colle acrylique. Afin d'obtenir un meilleur accrochage de la colle dans le tronçon de solidarisation 32, des stries d'accrochage, non représentées, peuvent être creusées dans le tronçon 32, en formant par exemple un taraudage.

En section transversale, le corps de rayon 4 a un périmètre p qui est choisi supérieur ou égal à 10 mm. De plus, la longueur L de l'extrémité 20 du corps de rayon 4 est choisie supérieure ou égale à 10 mm, et de préférence comprise entre 12 mm et 15 mm. Ainsi, on obtient une surface de collage supérieure ou égale à 100 mm², cette surface étant définie par le produit du périmètre p et de la longueur L. A titre d'exemple, si on utilise le corps de rayon 4 illustré par la figure 4, le périmètre p est égal à 2 x (l + e). La surface de collage est donc de 2 x (l + e) x L.

La résistance à la traction de la liaison par collage est directement proportionnelle au périmètre de collage. En revanche, elle n'est pas proportionnelle à la longueur du collage. Une étude effectuée par la demanderesse a démontré que lors d'une mise en traction longitudinale les éléments collés, les contraintes maximales se situent aux deux extrémités de la zone de collage. Cette étude a également montré que ces contraintes maximales ne varient que très peu en fonction de la longueur de la zone de collage, mais sont par contre inversement proportionnelles à la dimension extérieure (périmètre) de la zone de collage.

En utilisant l'embout 3, on favorise une augmentation de la surface transversale de collage. On ne joue donc pas nécessairement sur le paramètre L, permettant d'augmenter la surface longitudinale de collage, comme l'aurait fait l'homme du métier. En effet, en augmentant L, l'homme du métier aurait bien accru la surface de collage mais au détriment de la masse de l'embout 3 qui aurait également augmenté. Ainsi, l'invention permet de disposer d'une surface de collage capable de résister à la mise en tension du rayon 2 en limitant les risques de relaxation au fluage, tout en disposant d'un rayon léger. De plus, l'invention permet d'avoir une transition entre une forme allongée aérodynamique du corps de rayon 4 et la forme cylindrique de l'embout 3 pour assurer la fixation du rayon 2 sur la jante 6 et le moyeu 8.

Dans l'embout selon l'invention, la longueur (L) de l'extrémité est inférieure ou égale au périmètre (p) multiplié par 3, et de préférence au périmètre (p) multiplié par 1.5.

Le procédé de fabrication du rayon 2 comprend une première étape de réalisation du corps de rayon 4. Pour ce faire, il est utilisé un procédé de pultrusion, bien connu de l'homme du métier, permettant de former le corps de rayon 4 à section transversale allongée, représenté à titre d'exemple non limitatif sur les figures 3 et 4.

La pultrusion est un procédé très économique de réalisation d'un corps plein allongé de section constante.

La deuxième étape consiste en la réalisation de l'embout 3. On commence par effectuer un décolletage d'une ébauche 30 représentée sur les figures 6 et 7. Cette ébauche, de profil cylindrique, comprend le tronçon de fixation 31, identique à celui de l'embout 3, et une extrémité 33 destinée à former le tronçon de solidarisation 32.

On pourra également remplacer l'étape de décolletage par la frappe à froid comme pour la fabrication de visserie, ou encore par du moulage sous pression.

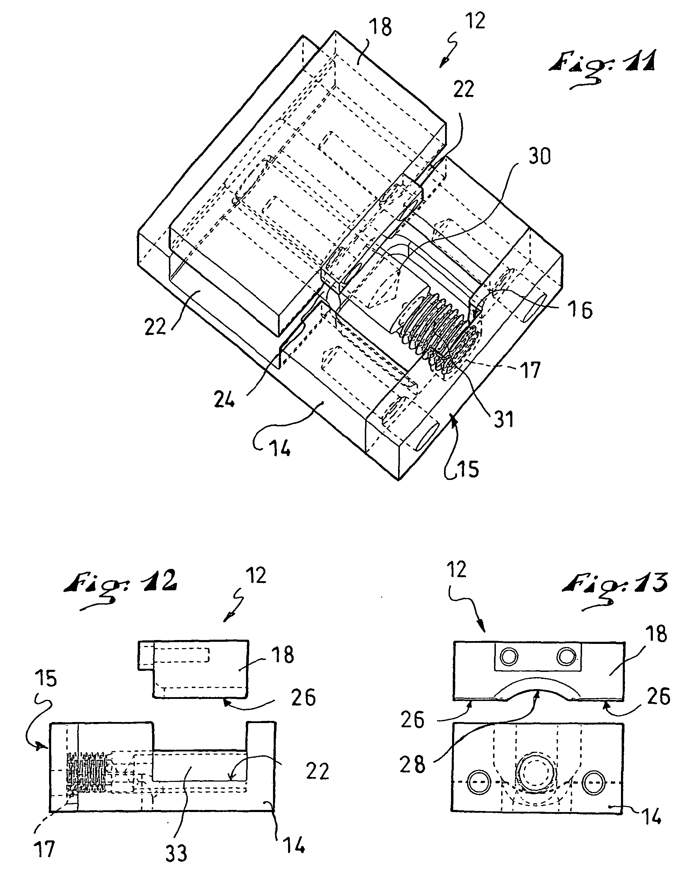

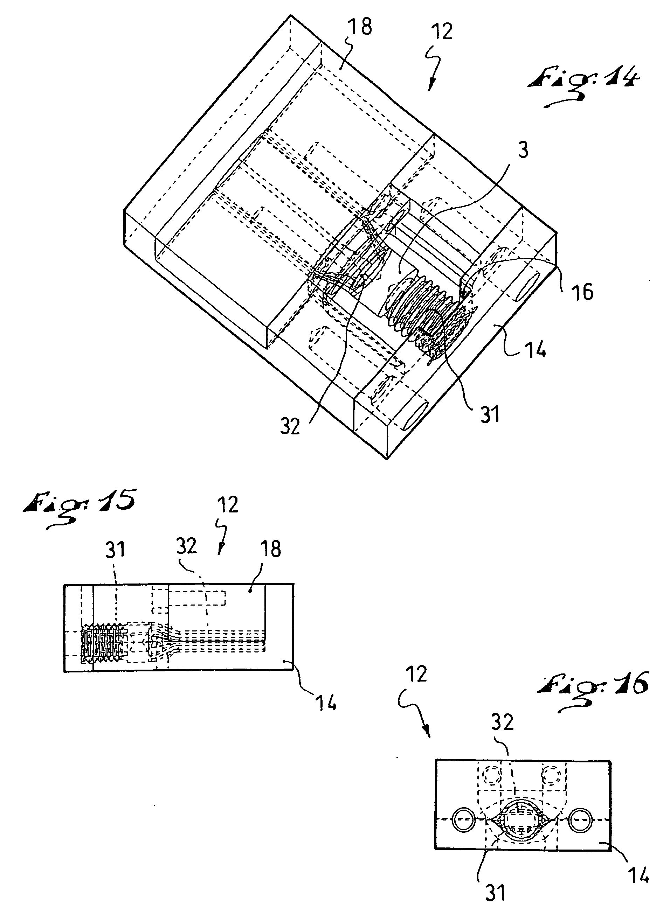

Cette extrémité 33 est ensuite frappée au moyen d'un outil de frappe 12, représenté sur les figures 11 à 16. On obtient ainsi l'embout 3, représenté sur les figures 8, 9 et 10, qui est composé du tronçon de fixation 31 et du tronçon de solidarisation 32. On peut prévoir une étape de traitement thermique avant l'étape de frappe. L'intérêt d'introduire cette étape est d'abaisser les caractéristiques mécaniques de l'ébauche 30 pour la rendre plus facile à frapper.

Après la mise en forme de l'ébauche, il peut être souhaitable de procéder à un autre traitement thermique pour restaurer de bonnes caractéristiques mécaniques.

Une autre option consiste en la mise en forme à chaud de l'embout.

La réalisation de l'embout 3 répond avantageusement à deux impératifs. La première contrainte consiste à obtenir une ouverture 11 permettant au corps de rayon 4 de se loger. Le deuxième impératif consiste à être capable d'obtenir une bonne répétabilité du procédé de fabrication de l'embout 3.

C'est dans cette optique que la Demanderesse a mis au point l'outil de frappe 12. L'outil 12, représenté sur les figures 11 à 16, comprend une base 14, une paroi frontale 15 dans laquelle est aménagée une échancrure de guidage 16 et un poinçon 18. La base 14 est munie de deux surfaces de butée 22, disposées de part et d'autre d'une surface creusée 24 de profil arrondi semi-elliptique. L'échancrure de guidage 16 a un profil allongé permettant de faire coulisser le tronçon de fixation 31 de l'ébauche 30. En outre, l'échancrure 16 comprend à son extrémité un siège 17 semi-circulaire d'appui du tronçon de fixation 31. Le poinçon 18 est muni de deux surfaces de butée 26 destinées à entrer en contact avec les deux surfaces de butée 22 de la base 14. Une surface 28 est creusée avec un profil arrondi semi-elliptique entre les surfaces de butée 26. Les deux surfaces 24, 28 sont définies de telle sorte qu'en butée, on obtient un profil correspondant au profil définitif extérieur du tronçon de solidarisation 32. Les différentes pièces 14, 18 de l'outil 12 peuvent être constituées, à titre d'exemple, d'acier.

L'utilisateur met en place l'ébauche 30 destinée à être frappée, sur la base 14 à l'aide de l'échancrure de guidage 16. L'extrémité 33 est placée sur la surface 24. Il met ensuite en place le poinçon 18, de telle sorte que la surface 28 est au contact de l'extrémité 33. L'ébauche 30 est ensuite frappée de manière à en écraser le tronçon de solidarisation 32.

Divers aménagements et variantes au rayon pour une roue à rayons, à la roue et à son procédé correspondant décrits ci-dessus sont par ailleurs envisageables. A titre d'exemples :
- le corps de rayon peut également être à section non constante.
- le rayon 2 conforme à l'invention peut être associé à un unique embout conforme à l'invention, à une première extrémité, alors que son autre extrémité est associée à un embout connu de l'état de la technique ; de plus la fixation de chaque embout, conforme ou pas à l'invention, peut être réalisée selon toute manière connue en soi ; ainsi,
- pour assurer la fixation du rayon 2 sur la jante 6 et sur le moyeu 8, on peut utiliser deux inserts en acier qu'on fixe sur les deux tronçons de fixation 31 de l'embout 3, grâce à un taraudage effectué sur le tronçon de fixation 31 de l'embout 3 ; l'un des deux inserts peut être une tête coudée ;
- pour fixer le rayon 2 sur la jante 6, on peut prévoir une liaison pivot entre l'insert et un écrou : le rayon 2 peut ainsi être mis en tension sans le faire tourner ;
- on peut également imaginer d'avoir un filetage sur le tronçon de fixation 31 de l'embout 3 : le premier embout 3 peut être vissé dans la jante 6 alors que, pour le second embout celui fixé au moyeu, on utilise un écrou de réglage de la tension.

## Revendications

1. Rayon (2) pour une roue à rayons (1), le rayon étant destiné à relier une jante (6) de la roue et un moyeu (8) de la roue, ce rayon comportant :
- un corps de rayon (4) plein en matériau composite,
- au moins un embout (3) en matériau métallique destiné à être fixé sur la jante ou sur le moyeu et destiné à être collé à une extrémité (10) du corps de rayon, **caractérisé en ce que** le corps de rayon (4) présente une section transversale allongée et **en ce que** le ou au moins un des embouts (3) définit un logement (5) dont la section transversale intérieure est sensiblement complémentaire de celle du corps de rayon, de manière à coiffer l'extrémité (10) en regard du corps, et **en ce que**, en section transversale, le corps de rayon (4) a un périmètre (p) supérieur ou égal à 10 mm et que le matériau de l'embout a une densité inférieure à 3, kg/dm³.

2. Rayon suivant la revendication 1, **caractérisé en ce que**, en section transversale, le corps de rayon (4) présente une épaisseur (e) et une longueur (l) telles que le rapport entre l'épaisseur et la longueur est inférieur ou égal à 0.5, et de préférence inférieur ou égal à 0.33.

3. Rayon suivant la revendication 2, **caractérisé en ce qu'**une longueur (L) de l'extrémité (20) du corps pénétrant dans le logement de l'embout (3) est supérieure ou égale à 10 mm, et de préférence comprise entre 12 mm et 15 mm.

4. Rayon suivant la revendication 2 ou 3, **caractérisé en ce que** la longueur (L) de l'extrémité est inférieure ou égale au périmètre (p) multiplié par 3, et de préférence au périmètre (p) multiplié par 1.5.

5. Rayon suivant la revendication 1, **caractérisé en ce qu'**une surface de collage entre l'extrémité (20) du corps de rayon (4) et l'embout (3) est supérieure ou égale à 100 mm².

6. Rayon suivant la revendication 5, **caractérisé en ce qu'**une paroi intérieure de l'embout (3) ou au moins un des embouts est creusée de stries d'accrochage de la colle, formant notamment un taraudage.

7. Rayon selon la revendication 6, **caractérisé en ce que** le métal est un alliage d'aluminium ou un alliage de magnésium.

8. Roue à rayons comprenant :
- un moyeu central (8),
- une jante périphérique (6),
- des rayons (2) reliant la jante au moyeu,
**caractérisée en ce qu'**au moins un des rayons (2), en particulier tous les rayons, est (sont) conforme(s) à l'une quelconque des revendications précédentes.

## Claims

1. Spoke (2) for a spoked wheel (1), the spoke being intended to connect a rim (6) of the wheel and a hub (8) of the wheel, this spoke comprising:
- a solid spoke body (4) made of composite material,
- at least one endpiece (3) made of a metallic material intended to be fixed to the rim or to the hub and intended to be bonded to one end (10) of the spoke body, **characterized in that** the spoke body (4) has an elongate cross section and **in that** the or at least one of the end-fittings (3) defines a housing (5) the interior cross section of which more or less complements that of the spoke body so as to cap the end (10) facing it of the body, and **in that**, in cross section, the spoke body (4) has a perimeter (p) greater than or equal to 10 mm, and **in that** the material of the end-piece has a density less than 3 kg/dm³.

2. Spoke according to Claim 1, **characterized in that**, in cross section, the spoke body (4) has a thickness (e) and a length (l) which are such that the ratio between the thickness and the length is less than or equal to 0.5 and preferably less than or equal to 0.33.

3. Spoke according to Claim 2, **characterized in that** a length (L) of the end (20) of the body penetrating the housing of the endpiece (3) is greater than or equal to 10 mm and preferably between 12 mm and 15 mm.

4. Spoke according to Claim 2 or 3, **characterized in that** the length (L) of the end is less than or equal to the perimeter (p) multiplied by 3, and preferably less than or equal to the perimeter (p) multiplied by 1.5.

5. Spoke according to Claim 1, **characterized in that** a surface for bonding-together the end (20) of the spoke body (4) and the endpiece (3) is of an area greater than or equal to 100 mm².

6. Spoke according to Claim 5, **characterized in that** an interior wall of the endpiece (3) or at least one of the endpieces is cut with striations that key to the adhesive, notably forming a tapped thread pattern.

7. Spoke according to Claim 6, **characterized in that** the metal is an aluminium alloy or a magnesium alloy.

8. Spoked wheel comprising:
- a central hub (8),
- a peripheral rim (6),
- spokes (2) connecting the rim to the hub,
**characterized in that** at least one of the spokes (2), particularly all the spokes, is (are) in accordance with any one of the preceding claims.

## Patentansprüche

1. Speiche (2) für ein Speichenrad (1), wobei die Speiche eine Felge (6) des Rads mit einer Nabe (8) des Rads verbinden soll, wobei die Speiche Folgendes umfasst:
- einen Speichenvollkörper (4) aus einem Verbundmaterial,
- mindestens ein Endstück (3) aus einem metallischen Material, das an der Felge oder an der Nabe befestigt werden soll und mit einem Ende (10) des Speichenkörpers verklebt werden soll, **dadurch gekennzeichnet, dass** der Speichenkörper (4) einen länglichen Querschnitt aufweist und dass das oder mindestens eines der Endstücke (3) eine Aufnahme (5) definiert, deren Innenquerschnitt im Wesentlichen komplementär zu dem des Speichenkörpers ist, um das Ende (10) gegenüber dem Körper zu bedecken, dass der Speichenkörper (4) im Querschnitt einen Umfang (p) aufweist, der größer gleich 10 mm ist, und dass das Material des Endstücks eine Dichte von unter 3 kg/dm³ aufweist.

2. Speiche nach Anspruch 1, **dadurch gekennzeichnet, dass** der Speichenkörper (4) im Querschnitt eine solche Dicke (e) und Länge (l) aufweist, dass das Verhältnis zwischen der Dicke und der Länge kleiner gleich 0,5 und vorzugsweise kleiner gleich 0,33 ist.

3. Speiche nach Anspruch 2, **dadurch gekennzeichnet, dass** eine Länge (L) des Endes (20) des Körpers, das in die Aufnahme des Endstücks (3) eintritt, größer gleich 10 mm ist und vorzugsweise zwischen 12 mm und 15 mm liegt.

4. Speiche nach Anspruch 2 oder 3, **dadurch gekennzeichnet, dass** die Länge (L) des Endes kleiner gleich dem Umfang (p) multipliziert mit 3 und vorzugsweise dem Umfang (p) multipliziert mit 1,5 ist.

5. Speiche nach Anspruch 1, **dadurch gekennzeichnet, dass** eine Klebefläche zwischen dem Ende (20) des Speichenkörpers (4) und dem Endstück (3) größer gleich 100 mm² ist.

6. Speiche nach Anspruch 5, **dadurch gekennzeichnet, dass** in einer Innenwand des Endstücks (3) oder mindestens eines der Endstücke Rillen zum Anhaften des Klebstoffs ausgebildet sind, die insbesondere ein Innengewinde bilden.

7. Speiche nach Anspruch 6, **dadurch gekennzeichnet, dass** das Metall aus einer Aluminiumlegierung oder einer Magnesiumlegierung besteht.

8. Speichenrad, umfassend:
- eine mittlere Nabe (8),
- eine Umfangsfelge (6),
- die Felge mit der Nabe verbindende Speichen (2),
**dadurch gekennzeichnet, dass** mindestens eine der Speichen (2), insbesondere alle Speichen, einem der vorhergehenden Ansprüche entspricht/entsprechen.
